# FASCICULE DE BREVET EUROPEEN

(11) **EP 2 626 616 B1**
(45) Date de publication et mention de la délivrance du brevet: **07.01.2015**
(21) Numéro de dépôt: 12007952.0
(22) Date de dépôt: 26.11.2012
(51) Int. Cl.: F17D 5/02, G01M 3/26

(54) **Circuit de drainage d'un liquide en provenance d'un groupe de motorisation équipant un giravion, intégrant un appareil de surveillance d'un écoulement excessif du liquide**
Dränagekreislauf einer Flüssigkeit, die aus einer Motorenanlage eines Drehflügelflugzeugs stammt, mit einem Überwachungsgerät für den übermäßigen Austritt der Flüssigkeit
Circuit for draining a liquid from an engine unit installed on a rotorcraft, including an apparatus for monitoring an excessive flow of the liquid

(30) Priorité: 08.02.2012 FR 1200375
(43) Date de publication de la demande: 14.08.2013
(73) Titulaire: Airbus Helicopters, 13725 Marignane Cedex (FR)
(72) Inventeur: Mougin, Stéphane, F-13790 Rousset (FR); Catteau, Jean-Sébastien, F-13100 AIX EN Provence (FR)
(74) Mandataire: GPI & Associés

(56) Documents cités:
- DE-A1- 10 047 586
- DE-U1- 29 516 718
- JP-A- 54 160 041
- US-A- 3 623 053

## Description

La présente invention est du domaine des aéronefs, giravion notamment, et relève plus particulièrement des équipements embarqués de surveillance du fonctionnement d'un groupe de motorisation équipant un tel aéronef. La présente invention porte plus spécifiquement sur les circuits de drainage par écoulement d'au moins un liquide en provenance d'un groupe de motorisation équipant un giravion, jusqu'à son évacuation vers l'environnement extérieur.

Les giravions sont équipés d'un ou de plusieurs groupes de motorisation pour l'entraînement en rotation d'au moins un rotor, voire encore pour l'entraînement d'au moins un accessoire équipant les giravions. Le groupe de motorisation est généralement installé dans un compartiment que comporte la cellule du giravion. Un tel compartiment est communément disposé en partie haute du fuselage du giravion, à proximité d'un rotor principal du giravion procurant sa sustentation voire aussi sa propulsion.

Dans ces conditions, il se pose le problème général de la surveillance et de la maintenance du groupe de motorisation. Il est souhaitable de faciliter au mieux une telle surveillance, y compris par un opérateur non expérimenté. Les giravions sont couramment soumis à des visites de maintenance régulières complexes effectuées par un opérateur qualifié, mais il est aussi opportun de permettre à un pilote du giravion d'effectuer rapidement et facilement en escale une surveillance du fonctionnement du groupe de motorisation.

Les groupes de motorisation comprennent divers organes, tels que par exemple un moteur principal de propulsion du giravion, un appareil de refroidissement, une boîte de transmission de puissance ou tout autre organe intégrant et/ou équipé d'un circuit et/ou d'une réserve de liquide utile à son fonctionnement. -

L'étanchéité des organes exploitant un liquide, et par analogie les éventuels circuits associés d'acheminement de ce liquide, est sujette à dysfonctionnement. Une perte d'étanchéité induit une fuite de liquide qu'il est souhaitable d'évacuer vers l'environnement extérieur du giravion, pour notamment éviter une stagnation d'un liquide potentiellement inflammable à proximité du groupe de motorisation. Il est aussi opportun de surveiller régulièrement et facilement la présence de telles fuites de liquide excessives, notamment par un pilote du giravion en escale ou par un opérateur sans qualification particulière, voire encore de générer une information d'alerte en cas d'une détection d'une telle fuite de liquide excessive.

Il est traditionnel d'équiper les giravions d'un circuit de drainage par écoulement naturel d'un ou de plusieurs liquides en fuite depuis le groupe de motorisation vers l'extérieur du giravion. Un tel circuit de drainage comprend un ou plusieurs conduits d'écoulement du liquide, dont au moins un conduit aval débouchant sur l'environnement extérieur du giravion. Un tel conduit aval est susceptible d'évacuer vers l'environnement extérieur non seulement du liquide en fuite en provenance d'au moins un organe du groupe de motorisation, mais aussi des eaux de ruissellement susceptibles d'être retenues dans l'environnement proche du groupe de motorisation.

Par exemple, un conduit est interposé entre l'environnement extérieur du giravion et une paroi de soubassement d'un compartiment logeant le groupe de motorisation. L'ensemble des liquides susceptibles d'être présents dans le compartiment est collecté et acheminé par le conduit, pour être évacué vers l'extérieur. Les dits liquides sont susceptibles d'être des liquides fonctionnels en fuite en provenance d'organes du groupe de motorisation, ou des eaux de ruissellement accumulées dans le compartiment tel que précédemment mentionné.

Par exemple encore, un circuit de drainage comprend un ou plusieurs circuits élémentaires de drainage comportant au moins un conduit amont et un conduit aval. Le conduit amont est en communication hydraulique à son débouché amont avec une source potentielle de liquide en fuite en provenance du groupe de motorisation, et à son débouché aval avec le conduit aval. Le liquide est acheminé par écoulement par le conduit amont, puis par le conduit aval pour son évacuation vers l'extérieur.

Selon une première variante d'un circuit élémentaire de drainage, un dit conduit amont et un dit conduit aval forment un conduit global reliant une source exclusive de liquide en fuite avec l'environnement extérieur. Le circuit de drainage comprend une pluralité de conduits globaux respectivement affectés au drainage de divers liquides en provenance d'organes respectifs du groupe de motorisation. Le circuit de drainage comprend aussi un conduit spécifique d'évacuation des eaux de ruissellement, interposé entre l'environnement extérieur et une paroi de soubassement d'un compartiment logeant le groupe de motorisation.

Selon une deuxième variante, le circuit élémentaire de drainage comprend un dit conduit amont débouchant sur un conduit aval commun à l'ensemble d'une pluralité de circuits élémentaires affectés à l'évacuation de liquides en provenance de sources potentielles de liquide en fuite. Le conduit aval est couramment formé par un conduit aval que comporte un dit conduit d'évacuation des eaux de ruissellement.

La surveillance d'une fuite potentielle d'un liquide peut être réalisée à partir d'un dispositif intégré au circuit de drainage. Un tel dispositif peut comporter un organe de collecte d'un liquide en fuite acheminé par le circuit de drainage, associé à des moyens d'alerte d'une quantité significative du liquide collecté à partir d'un seuil prédéfini correspondant à un flux nominal admis de liquide en fuite.

Par exemple selon le document US3623053 (GEN. ELECTRIC), un conduit de drainage d'un liquide en fuite équipant un aéronef est équipé d'un dispositif d'alerte d'un écoulement dans ce conduit d'une quantité significative de liquide considérée comme excessive. Le liquide est susceptible de provenir d'un réservoir de carburant, voire encore d'un quelconque organe fonctionnel de l'aéronef.

Le dispositif décrit par le document US3623053 comprend une coupelle de collecte du liquide logé à l'intérieur du conduit. La coupelle comporte en son fond une ouverture d'échappée du liquide selon un flux de liquide toléré. Pour une quantité prédéterminée de liquide collectée à l'intérieur de la coupelle, des moyens de détection de cette quantité prédéterminée de liquide génère un signal d'alerte. Les moyens de détection mettent en oeuvre une sonde formée d'un tube de détection d'une présence de liquide retenu en fond du récipient, ladite sonde étant en relation avec des moyens générateurs du signal d'alerte.

Un tel dispositif d'alerte d'un écoulement excessif de liquide dans le conduit mérite d'être amélioré.

Des améliorations sont par exemple à apporter au regard des modalités d'intégration du dispositif sur un quelconque circuit de drainage, et au regard d'une d'exploitation du dispositif pour une quelconque source de liquide en fuite. Les caractéristiques physicochimiques du liquide, viscosité notamment, et le flux d'écoulement du liquide à l'intérieur du circuit de drainage sont susceptibles d'être significativement différents d'une source à l'autre.

Il est encore souhaitable par exemple que le dispositif puisse être implanté sur un quelconque aéronef, en prenant en compte l'origine du liquide, et en un quelconque emplacement adapté d'un circuit de drainage par écoulement du liquide. L'architecture du circuit de drainage est susceptible d'être quelconque et diversifiée d'un aéronef à un autre.

Il est aussi par exemple opportun de fiabiliser et d'améliorer la pertinence de l'information susceptible d'être générée par les moyens d'alerte, tout en permettant son exploitation par un personnel non spécifiquement qualifié dans la maintenance de l'aéronef, pilote ou personnel d'assistance au pilote par exemple.

Il est aussi à prendre en compte une implantation sécurisée du dispositif sur le circuit de drainage.

Il est encore à prendre en compte une compétitivité du dispositif, impliquant une recherche de réduction des coûts induits par la fabrication du dispositif, son intégration et son implantation sur un circuit de drainage, son exploitation et sa maintenance.

L'arrière plan technologique éloigné de l'invention comprend aussi les documents DE 295 16 718, JP 54 160041, et DE 100 47 586.

Le but de la présente invention est de proposer un circuit de drainage par écoulement d'un liquide en fuite en provenance d'un organe équipant un aéronef, giravion notamment, intégrant un appareil d'alerte d'une circulation excessive du liquide à l'intérieur du circuit de drainage. Le circuit de drainage de la présente invention est plus particulièrement agencé pour l'évacuation de liquides vers l'extérieur d'un giravion, depuis l'environnement proche d'un groupe de motorisation équipant le giravion.

Il est plus particulièrement recherché par la présente invention de proposer un tel circuit de drainage répondant aux améliorations recherchées et procurant un compromis satisfaisant au regard des contraintes énoncées relatives à la surveillance d'un excès de liquide acheminé par le circuit de drainage.

Le circuit de drainage de la présente invention est un circuit de drainage par écoulement d'un liquide équipé d'au moins un dispositif de surveillance d'un flux excessif de ce liquide. Un tel liquide est notamment un liquide en fuite en provenance d'un organe que comporte un groupe de motorisation équipant un aéronef, giravion notamment.

Le circuit de drainage comprend au moins un conduit amont de collecte du liquide, ce conduit amont étant en communication hydraulique avec un conduit aval d'évacuation du liquide vers l'extérieur du circuit de drainage, et plus spécifiquement vers l'extérieur du giravion. Le dit dispositif de surveillance met en oeuvre au moins un appareil de surveillance, comprenant au moins un conduit de surveillance interposé entre le conduit amont et le conduit aval. Le conduit de surveillance est équipé de moyens de retenue partielle du liquide à l'intérieur d'une chambre, au-delà d'un seuil toléré d'écoulement du liquide à travers le conduit de surveillance. Le dispositif de surveillance comprend aussi des moyens d'alerte d'une quantité de liquide capturé par les moyens de retenue.

Selon la présente invention, un tel circuit de drainage est principalement reconnaissable en ce que la chambre de l'appareil de surveillance est agencée en déversoir du liquide capturé par les moyens de retenue, vers une réserve formée d'un conteneur extérieur au conduit de surveillance. La réserve est équipée de moyens d'indication visuelle d'une information d'alerte relative à la quantité de liquide contenue dans la réserve.

Les moyens d'indication sont préférentiellement des moyens de visualisation d'une information d'alerte formée d'une échelle visuelle proportionnelle à la quantité de liquide contenue dans la réserve.

Selon un procédé de mise en oeuvre du circuit de drainage de la présente invention, ce procédé comprend les étapes suivantes :
-) collecter à l'intérieur d'une chambre un excès de liquide circulant par écoulement naturel à travers un dit conduit de surveillance, la chambre étant ménagée par un volume amont du conduit de surveillance et le dit excès de liquide étant déterminé à partir de la faculté d'interdire son écoulement naturel à travers le conduit de surveillance par des moyens de retenue,
-) déverser naturellement en continu le dit excès de liquide vers un dit conteneur extérieur au conduit de surveillance, le conteneur étant muni de dits moyens d'indication préférentiellement proportionnelle de la quantité de liquide reçu par le conteneur par déversement depuis la chambre,
-) observer par un quelconque personnel l'information d'alerte affichée par les moyens d'indication pour déterminer par jugement de ce personnel au regard d'une consigne préalablement établie, le seuil de danger correspondant à un écoulement excessif du liquide à l'intérieur du conduit de surveillance, à partir de l'observation par le dit personnel de la quantité de liquide reçue par le conteneur et affichée par les moyens d'indication.

La chambre est plus particulièrement formée par un volume amont du conduit de surveillance délimité par sa section. La chambre est ménagée en prolongement d'un volume aval du conduit de surveillance délimité par sa section. Les moyens de retenue sont formés de moyens de restriction de l'écoulement du liquide entre le dit volume amont et le dit volume aval dédié à l'écoulement du liquide en quantité correspondante au dit seuil toléré.

Le volume de la chambre est indifférent, la chambre étant susceptible d'être d'un quelconque volume restreint. La chambre forme une capacité intermédiaire entre le conduit de surveillance et la réserve, et est apte à être d'un volume quelconque en étant avantageusement formée par le volume amont du conduit de surveillance surplombant des dits moyens de retenue. Le volume intérieur du conduit de surveillance est préservé d'un encombrement significatif par des organes de l'appareil de surveillance.

Les moyens de restriction sont par exemple formés par un rétreint du conduit de surveillance, dont la conformation correspond à la quantité de liquide correspondant au dit seuil toléré en étant adaptée aux caractéristiques physicochimiques du liquide. Un tel rétreint est de préférence formé par une réduction de section progressive du conduit de surveillance entre le volume amont et le volume aval, tel que conformée en cône ou analogue.

Selon une forme préférée de réalisation, les moyens de restriction sont formés d'une vanne de retenue à débit réglable, telle qu'agencée en clapet basculant ou analogue. De préférence, le débit de la vanne est taré en atelier en étant munie de moyens d'interdiction d'une modification de son débit par un personnel non autorisé.

Les moyens d'indication comprennent avantageusement un hublot de visualisation de la quantité de liquide contenu dans la réserve.

Selon une forme possible de réalisation, les moyens d'indication comprennent un organe d'affichage intégrant une échelle visuelle dont la mise en oeuvre est placée sous la dépendance de moyens de mesure de la quantité de liquide contenu dans la réserve. L'échelle visuelle est par exemple une échelle à variation de couleur et/ou d'intensité lumineuse d'organes lumineux composant l'organe d'affichage. L'échelle visuelle est par exemple encore une échelle à variation de position d'un repère visuel mobile par rapport à un repère gradué fixe, ou inversement. Les moyens de mesure sont par exemple un capteur de pression du liquide contenu dans la réserve.

La réserve est munie de moyens de signalisation d'un seuil de liquide atteint à l'intérieur du conteneur. De tels moyens de signalisation sont par exemple formés d'un repère visuel ménagé sur le hublot et correspondant à une dite consigne préalablement établie.

Subsidiairement, les moyens de signalisation comprennent au moins un organe visuel d'alarme susceptible d'être implanté sur une planche de bord d'un aéronef. L'organe visuel d'alarme est en relation avec de dits moyens de mesure et est affecté à la signalisation d'au moins un seuil de remplissage du conteneur. Le dit seuil de remplissage est susceptible de correspondre à un seuil de remplissage optimal du conteneur révélateur d'un défaut de fonctionnement important de l'organe à partir duquel est collecté le liquide par le circuit de drainage, et/ou de correspondre à un seuil de remplissage du conteneur correspondant à ladite consigne pour inviter le pilote à contrôler les moyens d'indications.

L'organisation de l'appareil de surveillance de la présente invention procure une diversification des informations relatives à une circulation excessive du liquide à travers le conduit de surveillance, permettant à un personnel non qualifié de vérifier visuellement l'état de remplissage de la réserve en escale, voire subsidiairement d'alerter en vol un tel personnel, pilote ou analogue notamment, du remplissage de la réserve au regard d'une dite consigne, pour inviter ce personnel à effectuer un contrôle visuel du niveau de remplissage de la réserve.

La chambre et le conteneur sont notamment en communication hydraulique entre eux, par l'intermédiaire d'un conduit de déversement interposé entre le conduit de surveillance et le conteneur.

Le conteneur est avantageusement équipé d'un dispositif de vidange sélective du conteneur, comprenant une vanne d'évacuation du liquide hors du conteneur vers un conduit de vidange en communication hydraulique avec le conduit aval. La vanne d'évacuation est par exemple agencée en robinet ou analogue manoeuvrable par un opérateur.

Le conteneur est de préférence équipé d'un dispositif d'évacuation d'un trop plein, comprenant un conduit de trop plein placé dans le conteneur et en communication hydraulique avec le conduit aval. Un débouché amont du conduit de trop plein est placé à un niveau toléré de liquide à l'intérieur du conteneur, un débouché aval du conduit de trop plein débouchant sur un organe de raccordement hydraulique du conduit de trop plein avec le conduit aval.

L'appareil de surveillance est avantageusement muni d'un conduit de rejet de la totalité du liquide admis dans le conduit de surveillance. Le dit conduit de rejet est en communication hydraulique avec le conduit aval, en étant par exemple formé par le conduit de vidange, sur lequel débouche l'extrémité aval du conduit de trop plein et l'extrémité aval du conduit de surveillance.

L'appareil de surveillance est de préférence muni de moyens de jonction réversible du conduit de surveillance sur le conduit amont, et du conduit de rejet sur le conduit aval, pour faciliter l'implantation de l'appareil de surveillance sur un quelconque circuit de drainage, en interposition entre un conduit amont et un conduit aval que comprend ce circuit de drainage. De tels moyens de jonction réversible sont par exemple du type à collier de serrage ou du type à collerettes en prise respectives sur les conduits correspondant et axialement assemblées entres elles, tel que par boulonnage ou moyens d'assemblage analogues.

Il est fait la distinction entre la chambre agencée en déversoir et apte à être formée par le volume amont du conduit de surveillance permettant de limiter l'encombrement et de simplifier la structure du conduit de surveillance, et la réserve disposée à l'extérieur du conduit de surveillance en étant formée d'un conteneur spécifique alimenté en liquide par déversement depuis la chambre par l'intermédiaire du conduit de déversement. Un tel conteneur est apte à être équipé des dits moyens d'indication proportionnelle de la quantité de liquide qu'elle contient, tel qu'à partir du dit hublot d'observation du contenu de la réserve.

Un observateur non qualifié en maintenance d'un aéronef, tel qu'un personnel d'aéronef en escale ou un personnel au sol, dispose rapidement d'une information visuelle, avantageusement proportionnelle, relative à la quantité de liquide acheminé depuis le conduit amont vers le conduit aval par l'intermédiaire du conduit de surveillance.

A partir de cette information constatée par l'opérateur, celui-ci peut juger rapidement préalablement à un vol de l'aéronef de la pertinence d'une éventuelle situation dangereuse qui serait induite par une fuite de liquide qu'il estimerait significative au regard d'une consigne préalablement établie pour interdire un tel vol et/ou pour ordonner une opération de maintenance de la source du liquide en fuite.

La faculté des moyens de retenue à capturer un excédent de liquide est aisément ajustable en fonction des caractéristiques physicochimiques du liquide spécifiquement admis dans le conduit de surveillance et en fonction d'un seuil toléré spécifique d'écoulement de ce liquide à travers le conduit de surveillance, sans modification structurelle profonde du conduit de surveillance et sans induire une complexification de sa structure.

Le conduit de surveillance associé à la réserve, voire encore associé aux divers conduit que comporte l'appareil de surveillance, forment un ensemble mécanique structurellement simple à fonctionnement par effet naturel d'écoulement de liquide par gravité.

L'appareil de surveillance peut être facilement greffé sur un circuit de drainage en interposition entre un quelconque conduit amont et un quelconque conduit aval. Une telle greffe peut être effectuée aisément en un quelconque emplacement sur le circuit de drainage, emplacement librement choisi pour permettre à un dit personnel non qualifié d'accéder rapidement et facilement à une information visuelle avantageusement proportionnelle relative à la quantité de liquide contenue dans la réserve. Une telle implantation est notamment réalisée par la mise en prise mécanique aisée de l'appareil de surveillance sur le circuit de drainage, d'une part à partir d'une jonction entre le conduit de surveillance et le conduit amont, et d'autre part à partir d'une jonction entre le conduit de rejet et le conduit aval.

La structure de l'appareil de surveillance est potentiellement strictement mécanique et son fonctionnement est strictement induit par effet naturel, au regard :
-) de la retenue du liquide en excès à l'intérieur du conduit de surveillance,
-) du remplissage de la réserve par déversement du dit excès de liquide vers le conteneur à partir de la chambre,
-) de l'information d'alerte correspondant à la quantité de liquide contenue dans la réserve,
-) de l'information transmise par des moyens d'alerte comprenant un dit hublot de visualisation de la quantité de liquide en excès collectée par le conteneur.

L'appareil de surveillance est fiable et l'information pertinente au regard de la dite proportionnalité transmise visuellement, tout en étant facilement accessible lors d'une visite en escale du dispositif de surveillance et tout en étant aisément compréhensible par un quelconque personnel non spécifiquement qualifié dans la maintenance des aéronefs. L'information d'alerte est potentiellement exploitable pour indiquer au personnel en escale une variation de débit du liquide collecté par la réserve entre deux escales, en permettant au dit personnel d'être juge au regard d'une dite consigne de l'ampleur du risque de danger induit par une fuite excessive du liquide et une telle variation de débit.

La maintenance de l'appareil de surveillance est aisée, au regard :
-) du remplacement de l'appareil de surveillance en cas de dysfonctionnement, l'appareil de surveillance étant organisé en un ensemble mécanique implantable sur le circuit de drainage par jonction des conduits correspondant entre eux,
-) d'un curage du conduit de surveillance dont le volume amont et le volume aval sont disposés en prolongement l'un de l'autre,
-) de la surveillance et de la vidange aisées à réaliser du conteneur permettant d'évacuer rapidement et facilement le liquide capturé en quantité quelconque par les moyens de retenue.

Le fonctionnement de l'appareil de surveillance est sécurisé, une obturation ou un engorgement du conduit de surveillance étant compensée par une évacuation vers le conduit aval du liquide capturé, à travers le conteneur et le conduit de trop plein. En cas d'obturation du conduit de surveillance, gênant voire interdisant l'écoulement du liquide à son travers dans la plage admise inférieure au dit seuil toléré, le liquide est néanmoins apte à circuler entre le conduit amont et le conduit aval à travers l'appareil de surveillance, et plus particulièrement à travers le conteneur et le conduit de rejet. Une quantité excessive de liquide retenu à l'intérieur du conduit de surveillance est interdite à partir de son évacuation naturelle par déversement vers le conteneur, une telle quantité excessive de liquide étant susceptible de générer des vapeurs en volume conséquent génératrices d'insécurité en étant potentiellement acheminées à travers le conduit amont vers la source de liquide en fuite.

La distinction entre le conduit de surveillance et la réserve permet notamment de doter l'appareil de surveillance d'un circuit de purge du conduit de surveillance en cas d'engorgement par le liquide du circuit de surveillance. Un tel circuit de purge comprend notamment le conduit de déversement, le conteneur et le conduit de trop plein accessoirement prolongé par le conduit de rejet.

Le circuit de drainage de la présente invention est plus particulièrement organisé pour former un circuit d'évacuation vers l'extérieur d'un giravion d'au moins un liquide en fuite collecté par le conduit amont depuis un groupe de motorisation d'un giravion, ou encore depuis un réservoir de carburant d'un giravion.

La prédisposition du circuit de drainage de la présente invention à la surveillance d'un liquide en fuite acheminé depuis un groupe de motorisation d'un giravion et/ou de son environnement proche vers l'environnement extérieur du giravion, ne préjuge en rien d'autres applications analogues qui pourraient en être faites. La structure proposée du circuit de drainage de la présente invention rend son adaptation aisée pour d'autres applications analogues liées à la surveillance de la quantité d'un liquide s'écoulant à travers un circuit de drainage et provenant d'une source de fuite de ce liquide depuis un quelconque organe d'un quelconque aéronef par exemple exploitant un tel liquide, telle que par exemple la surveillance de l'étanchéité d'un réservoir de carburant.

L'agencement de l'appareil de surveillance permet son implantation aisée sur un circuit de drainage équipant un giravion, selon diverses modalités d'interposition entre un dit conduit amont et un dit conduit aval. Les différentes modalités exposées ci-après d'implantation d'un appareil de surveillance sur le circuit de drainage sont à considérer isolément ou en combinaison, au regard de la possibilité d'implantation d'un ou de plusieurs appareils de surveillance sur le circuit de drainage.

Un dit conduit aval est par exemple un conduit de drainage d'eaux de ruissellement. Un tel conduit de drainage des eaux de ruissellement est notamment affecté à la collecte de liquides susceptibles de stagner dans l'environnement proche du groupe de motorisation, en étant mis en communication hydraulique avec un compartiment du giravion logeant le groupe de motorisation à travers une paroi de soubassement de ce compartiment.

Il est cependant préféré d'éviter de mêler les eaux de ruissellement évacuées vers l'extérieur avec des liquides fonctionnels réputés polluants, en affectant au moins un conduit aval spécifiquement dédié à l'évacuation extérieure des dits liquides fonctionnels en fuite.

Plus particulièrement et selon une forme préférée de réalisation, un conduit aval est en communication hydraulique exclusive avec au moins un dit appareil de surveillance.

Un dit appareil de surveillance est potentiellement en communication hydraulique exclusive avec un conduit amont de collecte d'un liquide spécifique par un circuit élémentaire de drainage correspondant que comprend le circuit de drainage. Le circuit de drainage comporte notamment une pluralité de circuits élémentaires de drainage respectivement affectés au drainage d'un liquide spécifique depuis un conduit amont vers un conduit aval spécifiquement réservés à l'acheminement de ce liquide.

Selon une forme possible de réalisation, un appareil de surveillance est en communication hydraulique avec une pluralité de conduits amont de collecte de liquides respectifs par des circuits élémentaires de drainage correspondants du circuit de drainage.

Plusieurs liquides spécifiques sont susceptibles d'être déversés vers le conteneur. Dans ce cas, les moyens d'indication sont notamment formés d'au moins un dit hublot, permettant à un opérateur de visualiser les quantités respectives des divers liquides spécifiques collectés à l'intérieur du conteneur à partir de leurs aspects respectifs variés.

Selon divers exemples de réalisation, la mise en communication hydraulique de l'appareil de surveillance avec divers conduits amont, est indifféremment réalisée par l'intermédiaire :
-) d'un conduit de surveillance en communication hydraulique avec au moins un conduit amont de la dite pluralité de conduits amont, et/ou
-) d'une pluralité de conduits de surveillance en communications hydrauliques respectives avec des conduits amont de la dite pluralité, et/ou
-) de réserves élémentaires ménagées par cloisonnement du conteneur et individuellement en communication hydraulique avec des conduits de surveillance respectifs par l'intermédiaire de conduits de déversement correspondant, les réserves élémentaires étant chacune équipées de moyens d'indications élémentaires qui leurs sont respectivement affectés.

Les notions amont et aval sont à considérer au regard du sens d'écoulement du liquide à travers le circuit de drainage, à travers les différents conduits que comporte le circuit de drainage, et à travers les différents conduits que comporte l'appareil de surveillance.

Des exemples de réalisation de la présente invention vont être décrits en relation avec les figures des planches annexées, dans lesquelles :
- la fig.1 est une représentation schématique d'un giravion équipé d'un circuit de drainage de la présente invention, selon un exemple simplifié de réalisation.
- la fig.2 est une illustration en perspective d'un exemple de réalisation d'un appareil de surveillance équipant un circuit de drainage de la présente invention.
- la fig.3 est une illustration d'un exemple de réalisation de moyens de retenue équipant un conduit de surveillance que comprend un appareil de surveillance de la présente invention.
- les fig.4 à fig.8 sont des illustrations schématiques de diverses architectures d'un circuit de drainage de la présente invention.

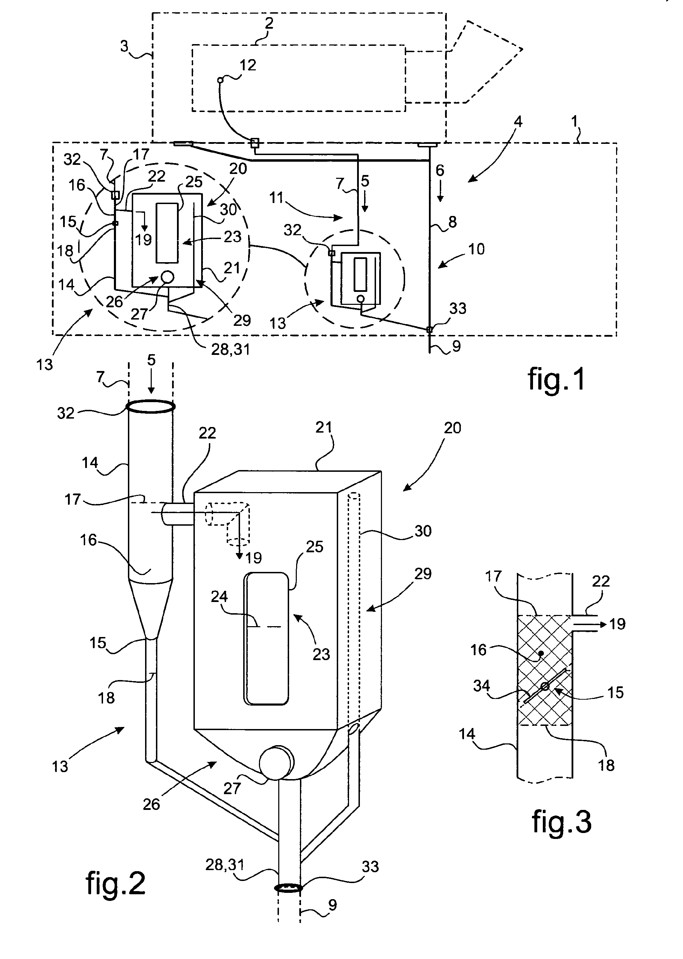

Sur la fig.1 un giravion 1 est équipé d'un groupe de motorisation 2 logé dans un compartiment 3 du giravion 1. Le giravion 1 est équipé d'un circuit de drainage 4 de liquides 5, 6 par écoulement naturel, comprenant divers conduits dont au moins un conduit amont 7, 8 et au moins un conduit aval 9.

Le ou les conduits amont 7, 8 sont destinés à collecter et à acheminer des liquides 5, 6 depuis le groupe de motorisation 3, vers un conduit aval 9 d'évacuation vers l'extérieur des liquides 5, 6 collectés. Un circuit élémentaire de drainage 10 est affecté à l'évacuation des eaux de ruissellement 6 susceptibles de stagner en fond du compartiment 3 logeant le groupe de motorisation 2. Au moins un autre circuit élémentaire de drainage 11 est affecté à l'évacuation d'un liquide fonctionnel 5 en provenance d'une source de liquide 12 en fuite, notamment depuis un organe du groupe de motorisation 2.

Le circuit élémentaire de drainage 11 affecté à l'évacuation du liquide fonctionnel 5 est équipé d'un appareil de surveillance 13 de la quantité de liquide 5 qu'il achemine. Le circuit de drainage 4 est susceptible de comporter plusieurs circuits élémentaires de drainage 11 de liquides 5 respectifs, et d'être équipé d'un dispositif de surveillance comportant une batterie d'appareils de surveillance 13 respectivement affectés à la surveillance individuelle de divers liquides 5 acheminés par les circuits élémentaires de drainage 11.

Sur les fig.1 et fig.2, l'appareil de surveillance 13 est interposé entre un dit conduit amont 7 et un dit conduit aval 9. L'appareil de surveillance 13 comprend un conduit de surveillance 14 équipé de moyens de retenue 15 du liquide 5 qu'il reçoit depuis le conduit amont 7. La capture d'une fraction de liquide 5 par les moyens de retenue 15 est réalisée au-delà d'un seuil toléré d'écoulement du liquide 5. Au-delà d'un tel seuil toléré, il est considéré que la quantité de liquide 5 acheminé par le conduit amont 7 est révélatrice d'un dysfonctionnement de la source 12 de fuite dont est issu le liquide 5.

Les moyens de retenue 15 capturent le cas échéant une quantité de liquide 5 reçu par une chambre 16 formée par un volume amont 17 du conduit de surveillance 14. Le volume amont 17 surplombe au regard de la gravité les moyens de retenue 15, et est disposé dans le prolongement du volume aval 18 du conduit de surveillance 14 recevant la fraction autorisée de liquide 5 au regard du dit seuil toléré. La chambre 16 est agencée en déversoir du liquide capturé 19 vers une réserve 20 formée d'un conteneur 21 par l'intermédiaire d'un conduit de déversement 22 interposé entre le conduit de surveillance 14 et le conteneur 21.

Le conteneur 21 est équipé de moyens d'indication 23 de la quantité de liquide 24 éventuellement contenu dans la réserve 20, formant des moyens d'alerte d'une quantité excessive de liquide 5 acheminé depuis le conduit amont 7. Les moyens d'indication 23 sont notamment structurés en hublot 25, qui fournit à un opérateur un accès visuel à la quantité de liquide 24 contenu dans la réserve 20. L'opérateur peut constater et apprécier l'ampleur de la fuite de liquide 5 en provenance de la source 12, et les conséquences éventuelles sur le fonctionnement de l'organe correspondant du groupe de motorisation 3.

Le conteneur 21 est équipé d'un dispositif de vidange 26, comprenant une vanne d'évacuation 27 du liquide 24 hors du conteneur 21, vers un conduit de vidange 28 en communication hydraulique avec le conduit aval 9. Le conteneur 21 est aussi équipé d'un dispositif d'évacuation d'un trop plein 29, comprenant un conduit de trop plein 30 logé dans le conteneur 21. Le conduit de trop plein 30 et le conduit de surveillance 14 débouchent à leurs extrémités aval respectives sur le conduit de vidange 28, pour leurs mises en communication hydraulique respectives avec le conduit aval 9. Le conduit de vidange 28 forme un conduit de rejet 31 global de la totalité du liquide 5 admis à l'intérieur du conduit de surveillance 14.

L'appareil de surveillance 13 est placé en interposition entre le conduit amont 7 et le conduit aval 9 par l'intermédiaire de moyens de jonction réversible 32, 33, tel que colliers de serrage ou organes analogues de mise en communication hydraulique entre deux conduits. Un moyen de jonction amont 32 met en communication hydraulique le conduit amont 7 avec l'extrémité amont du conduit de surveillance 14. Un moyen de jonction aval 33 met en communication hydraulique l'extrémité aval du conduit de rejet 31 formé par le conduit de vidange 28 avec le conduit aval 9.

Sur les fig.2 et fig.3, des exemples respectifs de réalisation des moyens de retenue 15 sont représentés.

Sur la fig.2, le conduit de surveillance 14 comporte un rétreint ménagé entre le volume amont 17 et le volume aval 18 du conduit de surveillance 14. Ce rétreint est formé par une variation progressive de la section du conduit de surveillance 14, telle qu'à partir d'une réduction conique de son diamètre.

Sur la fig.3, le conduit de surveillance 14 est équipé d'une vanne de retenue 34 du liquide 5 à débit variable, interposée entre le volume amont 17 et le volume aval 18 du conduit de surveillance 14. Sur l'exemple de réalisation illustré, une telle vanne de retenue 34 est formée d'un clapet à position variable. La vanne de retenue 34 est susceptible d'être manceuvrée par un opérateur depuis l'extérieur de l'appareil de surveillance 13, et plus particulièrement depuis l'extérieur du conteneur 21. La manoeuvre de la vanne de retenue est par exemple réalisée par basculement du clapet, pour autoriser le passage du liquide 5 vers le volume aval 18 en quantité correspondant au dit seuil toléré d'écoulement du liquide 5 à travers le circuit de drainage. Un même appareil de surveillance 13 est potentiellement exploitable pour la surveillance de l'écoulement d'un quelconque liquide 5, en adaptant la position d'ouverture de la vanne de retenue 34 selon les caractéristiques physicochimiques spécifiques du liquide 5 à surveiller et selon la valeur du dit seuil toléré d'écoulement du liquide 5 à travers le conduit de surveillance 14.

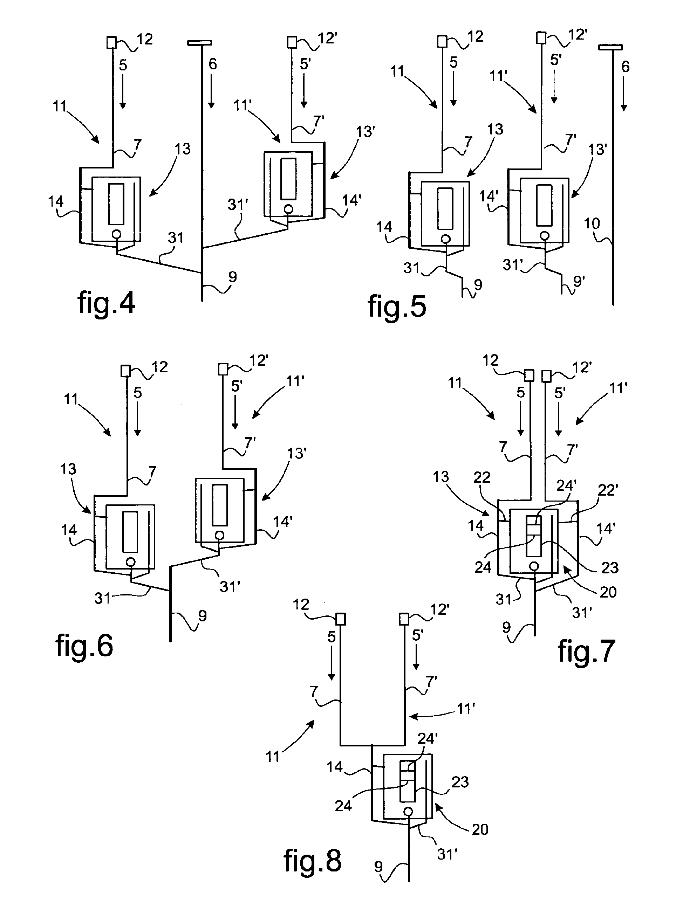

Sur la fig.4, plusieurs circuits élémentaires de drainage 11, 11' sont affectés à l'évacuation vers l'extérieur de liquides 5, 5' qu'ils acheminent respectivement, les dits liquides 5, 5' provenant de sources 12, 12' de fuites respectives. Chaque circuit élémentaire de drainage 11, 11' est équipé d'un dit appareil de surveillance 13, 13', dont les conduits de surveillance 14, 14' sont en communication hydraulique avec des conduits amont 7, 7' respectifs et dont les conduits de rejet 31, 31' sont en communication hydraulique avec un même conduit aval 9. Ce conduit aval 9 est susceptible d'être formé par un conduit aval spécifique à l'évacuation de liquides fonctionnels, ou tel que représenté par un conduit aval d'un circuit élémentaire de drainage 10 des eaux de ruissellement.

Sur la fig.5, un ou plusieurs circuits élémentaires de drainage 11, 11' sont respectivement dédiés au drainage de liquides fonctionnels 5, 5', et sont chacun équipés d'un appareil de surveillance 13, 13' qui leurs est affecté. Le conduit de surveillance 14, 14' et le conduit de rejet 31, 31' de chaque appareil de surveillance 13, 13' sont en communication hydraulique avec respectivement un conduit amont 7, 7' et un conduit aval 9, 9' spécifiques à chacun des circuits élémentaires de drainage 11, 11'.

Sur la fig.6, plusieurs circuits élémentaires de drainage 11, 11' comprennent des conduits amont 7, 7' et des appareils de surveillance 13, 13' respectifs, et un conduit aval 9 commun. Un tel conduit aval 9 est spécifique à ces circuits élémentaires de drainage 11, 11' réservés au drainage de liquides fonctionnels 5, 5' en fuite. Les conduits de surveillance 14, 14' des appareils de surveillance 13, 13' sont en communication hydraulique avec des conduits amont 7, 7' respectifs. Les conduits de rejet 31, 31' des appareils de surveillance 13, 13' sont en communication hydraulique avec un conduit aval 9 commun.

Sur les fig.7 et fig.8, un même appareil de surveillance 13 est exploité pour la surveillance de l'écoulement de divers liquides 5, 5' en provenance de sources 12, 12' de fuite respectives. L'information fournie par les moyens d'indication 23 est relative à la quantité respective des divers liquides 24, 24' à l'intérieur de la réserve 20 de l'appareil de surveillance 13.

Sur la fig.7, les divers liquides 5, 5' sont acheminés vers des conduits de surveillance 14, 14' respectifs de l'appareil de surveillance 13. Des conduits de déversement 22, 22' sont respectivement affectés aux divers conduits de surveillance 14, 14' pour leur mise en communication hydraulique individuelle avec une même réserve 20 de l'appareil de surveillance 13.

Sur la fig.8, le conduit de surveillance 14 de l'appareil de surveillance 13 est en communication hydraulique avec une pluralité de conduits amont 7, 7' que comportent respectivement plusieurs circuits élémentaires de drainage 11, 11'.

## Revendications

1. Circuit de drainage (4) par écoulement d'un liquide (5, 5', 6) comprenant au moins un conduit amont (7, 7', 8) de collecte du liquide (5, 5', 6) en communication hydraulique avec un conduit aval (9) d'évacuation du liquide (5, 5', 6) vers l'extérieur du circuit de drainage (4), le circuit de drainage (4) étant équipé d'au moins un dispositif de surveillance d'un flux excessif de liquide (5, 5') mettant en oeuvre au moins un appareil de surveillance (13, 13') comprenant au moins un conduit de surveillance (14) interposé entre le conduit amont (7) et le conduit aval (9) et équipé de moyens de retenue (15) partielle du liquide (5) à l'intérieur d'une chambre (16) au-delà d'un seuil toléré d'écoulement du liquide (5) à travers le conduit de surveillance (14), le dispositif de surveillance (13) comprenant des moyens d'alerte d'une quantité de liquide capturé (19) par les moyens de retenue (15),
**caractérisé en ce que** la chambre (16) est agencée en déversoir (22) du liquide capturé (19) par les moyens de retenue (15) vers une réserve (20) formée d'un conteneur (21) extérieur au conduit de surveillance (14) et équipée de moyens d'indication (23) visuelle d'une information d'alerte relative à la quantité de liquide (24) contenue dans la réserve (20).

2. Circuit de drainage selon la revendication 1,
**caractérisé en ce que** les moyens d'indication (23) sont des moyens de visualisation d'une information d'alerte formée d'une échelle visuelle proportionnelle à la quantité de liquide (24) contenue dans la réserve (20).

3. Circuit de drainage selon l'une quelconque des revendications 1 et 2,
**caractérisé en ce que** la chambre (16) est formée par un volume amont (17) du conduit de surveillance (14) délimité par sa section et est ménagée en prolongement d'un volume aval (18) du conduit de surveillance (14) délimité par sa section, les moyens de retenue (15) étant formés de moyens de restriction de l'écoulement du liquide (5) entre le dit volume amont (17) et le dit volume aval (18).

4. Circuit de drainage selon la revendication 3,
**caractérisé en ce que** les moyens de restriction sont formés par un rétreint du conduit de surveillance (14).

5. Circuit de drainage selon la revendication 4,
**caractérisé en ce que** le rétreint est formé par une réduction de section progressive du conduit de surveillance (14) entre le volume amont (17) et le volume aval (18).

6. Circuit de drainage selon la revendication 3,
**caractérisé en ce que** les moyens de restriction sont formés d'une vanne de retenue (34) à débit réglable, la vanne étant tarée et étant munie de moyens d'interdiction d'une modification de son débit par un personnel non autorisé.

7. Circuit de drainage selon l'une quelconque des revendications 1 à 6,
**caractérisé en ce que** les moyens d'indication (23) comprennent un hublot (25) de visualisation de la quantité de liquide (24) contenu dans la réserve (20).

8. Circuit de drainage selon l'une quelconque des revendications 1 à 7,
**caractérisé en ce que** les moyens d'indication (23) comprennent un organe d'affichage intégrant une échelle visuelle dont la mise en oeuvre est placée sous la dépendance de moyens de mesure de la quantité de liquide contenu dans la réserve (20).

9. Circuit de drainage selon l'une quelconque des revendications 1 à 8,
**caractérisé en ce que** la chambre (16) et le conteneur (21) sont en communication hydraulique entre eux par l'intermédiaire d'un conduit de déversement (22) interposé entre le conduit de surveillance (14) et le conteneur (21).

10. Circuit de drainage selon l'une quelconque des revendications 1 à 9,
**caractérisé en ce que** le conteneur (21) est équipé d'un dispositif de vidange (26) sélective du conteneur (21), comprenant une vanne d'évacuation (27) du liquide (24) hors du conteneur (21) vers un conduit de vidange (28) en communication hydraulique avec le conduit aval (9).

11. Circuit de drainage selon l'une quelconque des revendications 1 à 10,
**caractérisé en ce que** le conteneur (21) est équipé d'un dispositif d'évacuation (29) d'un trop plein, comprenant un conduit de trop plein (30) placé dans le conteneur (21) et en communication hydraulique avec le conduit aval (9).

12. Circuit de drainage selon la revendication 11,
**caractérisé en ce que** l'appareil de surveillance (13, 13') est doté d'un circuit de purge du conduit de surveillance (14) en cas d'engorgement par le liquide (5) du conduit de surveillance (14), comprenant le conduit de déversement (22), le conteneur (21) et le conduit de trop plein (30).

13. Circuit de drainage selon l'une quelconque des revendications 1 à 12,
**caractérisé en ce que** l'appareil de surveillance (13) est muni d'un conduit de rejet (31) de la totalité du liquide (5) admis dans le conduit de surveillance (14), le dit conduit de rejet (31) étant en communication hydraulique avec le conduit aval (9).

14. Circuit de drainage selon la revendication 13,
**caractérisé en ce que** le conduit de rejet (31) est formé par le conduit de vidange (28), sur lequel débouche l'extrémité aval du conduit de trop plein (30) et l'extrémité aval du conduit de surveillance (14).

15. Circuit de drainage selon l'une quelconque des revendications 13 et 14,
**caractérisé en ce que** l'appareil de surveillance (13) est muni de moyens de jonction réversible (32,33) du conduit de surveillance (14) sur le conduit amont (7), et du conduit de rejet (31) sur le conduit aval (9).

16. Circuit de drainage selon l'une quelconque des revendications 1 à 15,
**caractérisé en ce que** le circuit de drainage (4) est un circuit d'évacuation vers l'extérieur d'au moins un liquide (5) en fuite collecté par le conduit amont (7) depuis un groupe de motorisation (2) d'un giravion (1).

17. Circuit de drainage selon la revendication 16,
**caractérisé en ce qu'**un dit conduit aval (9) est un conduit de drainage d'eaux de ruissellement.

18. Circuit de drainage selon l'une quelconque des revendications 16 et 17,
**caractérisé en ce qu'**un dit conduit aval (9) est en communication hydraulique exclusive avec au moins un dit appareil de surveillance (13, 13').

19. Circuit de drainage selon l'une quelconque des revendications 16 à 18,
**caractérisé en ce qu'**un dit appareil de surveillance (13, 13') est en communication hydraulique exclusive avec un conduit amont (7, 7') de collecte d'un liquide (5) spécifique par un circuit élémentaire de drainage (11, 11') correspondant que comprend le circuit de drainage (4).

20. Circuit de drainage selon l'une quelconque des revendications 16 à 19,
**caractérisé en ce qu'**un dit appareil de surveillance (13) est en communication hydraulique avec une pluralité de conduits amont (7,7') de collecte de liquides (5, 5') respectifs par des circuits élémentaires de drainage (11, 11') correspondants du circuit de drainage (4).

21. Circuit de drainage selon l'une quelconque des revendications 1 à 15,
**caractérisé en ce que** le circuit de drainage (4) est un circuit d'évacuation vers l'extérieur d'au moins un liquide (5) en fuite collecté par le conduit amont (7) depuis un réservoir de carburant d'un giravion (1).

## Patentansprüche

1. Kreislauf (4) zur Drainage einer Flüssigkeit (5, 5', 6) durch Abfluss mit mindestens einer oberen Leitung (7, 7', 8) zum Sammeln der Flüssigkeit (5, 5', 6), die in hydraulischer Verbindung mit einer unteren Leitung (9) zum Ablassen der Flüssigkeit (5, 5', 6) zum Äußeren des Drainagekreislaufs (4) hin steht, wobei der Drainagekreislauf (4) mit mindestens einer Vorrichtung zur Überwachung eines übermäßigen Flusses von Flüssigkeit (5, 5') ausgerüstet ist, die mindestens ein Überwachungsgerät (13, 13') einsetzt, das mindestens eine Überwachungsleitung (14) aufweist, die zwischen der oberen Leitung (7) und der unteren Leitung (9) angeordnet ist und mit Mitteln (15) zum teilweisen Zurückhalten der Flüssigkeit (5) im Inneren einer Kammer (16) oberhalb einer tolerierten Ausflussschwelle der Flüssigkeit (5) durch die Überwachungsleitung (14) ausgerüstet ist, wobei die Überwachungsvorrichtung (13) Mittel zur Warnung vor einer von den Rückhaltemitteln (15) aufgenommenen Flüssigkeitsmenge (19) aufweist,
**dadurch gekennzeichnet, dass** die Kammer (16) als Überlauf (22) der von den Rückhaltemitteln (15) aufgenommenen Flüssigkeit (19) in einem Raum (20) ausgebildet ist, der von einem Behälter (21) außerhalb der Überwachungsleitung (14) gebildet ist und mit Mitteln (23) zur visuellen Anzeige einer Warninformation bezüglich der in dem Raum (20) enthaltenen Flüssigkeitsmenge (24) ausgerüstet ist.

2. Drainagekreislauf nach Anspruch 1,
**dadurch gekennzeichnet, dass** die Anzeigemittel (23) Mittel zur Sichtbarmachung einer Warninformation sind, die durch eine sichtbare Skala gebildet werden, die proportional zu der Menge an Flüssigkeit (24) ist, die in dem Raum (20) enthalten ist.

3. Drainagekreislauf nach einem der Ansprüche 1 und 2,
dadurch dass die Kammer (16) durch ein oberes Volumen (17) der Überwachungsleitung (14) gebildet ist, das durch seinen Querschnitt begrenzt ist und in Verlängerung eines unteren Volumens (18) der Überwachungsleitung (14) angeordnet ist, das durch seinen Querschnitt begrenzt ist, wobei die Rückhaltemittel (15) von Mitteln zur Begrenzung des Flusses der Flüssigkeit (5) zwischen dem oberen Volumen (17) und dem unteren Volumen (18) gebildet werden.

4. Drainagekreislauf nach Anspruch 3,
dadurch dass die Begrenzungsmittel von einer Verjüngung der Überwachungsleitung (14) gebildet werden.

5. Drainagekreislauf nach Anspruch 4,
**dadurch gekennzeichnet, dass** die Verjüngung gebildet ist durch eine progressive Reduzierung des Querschnitts der Überwachungsleitung (14) zwischen dem oberen Volumen (17) und dem unteren Volumen (18).

6. Drainagekreislauf nach Anspruch 3,
dadurch dass die Begrenzungsmittel durch eine Stauklappe (34) mit regelbarem Durchsatz gebildet werden, wobei die Stauklappe tariert ist und mit Mitteln zum Untersagen einer Veränderung ihres Durchsatzes durch nicht autorisierte Bedienungspersonen versehen ist.

7. Drainagekreislauf nach einem der Ansprüche 1 bis 6,
**dadurch gekennzeichnet, dass** die Anzeigemittel (23) ein Fenster (25) zur Sichtbarmachung der Flüssigkeitsmenge (24), die in dem Raum (20) enthalten ist, aufweisen.

8. Drainagekreislauf nach einem der Ansprüche 1 bis 7,
**dadurch gekennzeichnet, dass** die Anzeigemittel (23) ein Anzeigeorgan aufweisen, das eine visuelle Skala umfasst, die unter die Abhängigkeit von Mitteln zum Messen der in dem Raum (20) enthaltennen Flüssigkeitsmenge gestellt ist.

9. Drainagekreislauf nach einem der Ansprüche 1 bis 8,
**dadurch gekennzeichnet, dass** die Kammer (16) und der Behälter (21) untereinander durch eine Überlaufleitung (22) in hydraulischer Verbindung stehen, die zwischen der Überwachungsleitung (14) und dem Behälter (21) angeordnet ist.

10. Drainagekreislauf nach einem der Ansprüche 1 bis 9,
**dadurch gekennzeichnet, dass** der Behälter (21) mit einer Vorrichtung (26) zur selektiven Entleerung des Behälters (21) ausgerüstet ist mit einem Ventil (27) zum Ablassen der Flüssigkeit (24) aus dem Behälter (21) heraus in eine Entleerungsleitung (28), die in hydraulischer Verbindung mit der unteren Leitung (9) steht.

11. Drainagekreislauf nach einem der Ansprüche 1 bis 10,
**dadurch gekennzeichnet, dass** der Behälter (21) mit einer Vorrichtung (29) zum Ablassen eines Überschusses ausgerüstet ist, die eine Überschussleitung (30) aufweist, die in dem Behälter (21) angeordnet ist und mit der unteren Leitung (9) in hydraulischer Verbindung steht.

12. Drainagekreislauf nach Anspruch 11,
**dadurch gekennzeichnet, dass** das Überwachungsgerät (13, 13') mit einem Kreislauf zur Entleerung der Überwachungsleitung (14) im Falle ihrer Überfüllung mit der Flüssigkeit (5) versehen ist, der die Überlaufleitung (22), den Behälter (21) und die Überschussleitung (30) umfasst.

13. Drainagekreislauf nach einem der Ansprüche 1 bis 12,
**dadurch gekennzeichnet, dass** das Überwachungsgerät (13) mit einer Ausflussleitung (31) für die gesamte Flüssigkeit (5) versehen ist, die in der Überwachungsleitung (14) aufgenommen ist, wobei die Ausflussleitung (31) in hydraulischer Verbindung mit der unteren Leitung (9) steht.

14. Drainagekreislauf nach Anspruch 13,
**dadurch gekennzeichnet, dass** die Ausflussleitung (31) von der Entleerungsleitung (28) gebildet wird, in der das untere Ende der Überschussleitung (30) und das untere Ende der Überwachungsleitung (14) münden.

15. Drainagekreislauf nach einem der Ansprüche 13 und 14,
**dadurch gekennzeichnet, dass** das Überwachungsgerät (13) mit Mitteln (32, 33) zur reversiblen Verbindung der Überwachungsleitung (14) mit der oberen Leitung (7) und der Ausflussleitung (31) mit der unteren Leitung (9) versehen ist.

16. Drainagekreislauf nach einem der Ansprüche 1 bis 15,
**dadurch gekennzeichnet, dass** der Drainagekreislauf (4) ein Kreislauf zur Entleerung mindestens einer ausfließenden Flüssigkeit (5) nach außen ist, die von der oberen Leitung (7) ausgehend von einer Motorgruppe (2) eines Drehflügelflugzeugs (1) gesammelt wird.

17. Drainagekreislauf nach Anspruch 16,
**dadurch gekennzeichnet, dass** die untere Leitung (9) eine Leitung zur Drainage von Rieselwasser ist.

18. Drainagekreislaufnach einem der Ansprüche 16 und 17,
**dadurch gekennzeichnet, dass** die untere Leitung (9) ausschließlich mit mindestens dem Überwachungsgerät (13, 13') in hydraulischer Verbindung steht.

19. Drainagekreislauf nach einem der Ansprüche 16 bis 18,
**dadurch gekennzeichnet, dass** das Überwachungsgerät (13, 13') in ausschließlicher hydraulischer Verbindung mit einer oberen Leitung (7, 7') zum Sammeln einer spezifischen Flüssigkeit (5) durch einen entsprechenden elementaren Drainagekreislauf, den der Drainagekreislauf (4) aufweist, steht.

20. Drainagekreislauf nach einem der Ansprüche 16 bis 19,
**dadurch gekennzeichnet, dass** das Überwachungsgerät (13) in hydraulischer Verbindung mit einer Mehrzahl von oberen Leitungen (7, 7') zum Sammeln jeweiliger Flüssigkeiten (5, 5') durch entsprechende elementare Drainagekreisläufe (11, 11') des Drainagekreislaufs (4) steht.

21. Drainagekreislauf nach einem der Ansprüche 1 bis 15,
**dadurch gekennzeichnet, dass** der Drainagekreislauf (4) ein Kreislauf zur Entleerung mindestens einer ausfließenden Flüssigkeit (5), die von der oberen Leitung (7) ausgehend von einem Treibstofftank eines Drehflügelflugzeugs (1) gesammelt wurde, nach außen ist.

## Claims

1. Drainage circuit (4) for draining a liquid (5, 5', 6) by flow, the circuit comprising at least one upstream duct (7, 7', 8) for collecting the liquid (5, 5', 6) in hydraulic communication with a downstream duct (9) for discharging the liquid (5, 5', 6) to the outside of the drainage circuit (4), the drainage circuit (4) being fitted with at least one monitoring device for monitoring an excessive flow of liquid (5, 5') using at least one monitoring appliance (13, 13') comprising at least one monitoring duct (14) interposed between the upstream duct (7) and the downstream duct (9) and fitted with retaining means (15) for retaining part of the liquid (5) inside a chamber (16) beyond an acceptable threshold for the flow of the liquid (5) through the monitoring duct (14), the monitoring device (13) comprising warning means for warning of a quantity of liquid captured (19) by the retaining means (15),
**characterised in that** the chamber (16) is arranged as a spillway (22) for spilling of the liquid captured (19) by the retaining means (15) towards a reserve (20) formed by a container (21) external to the monitoring duct (14) and fitted with visual indicating means (23) for indicating warning information about the quantity of liquid (24) contained in the reserve (20).

2. Drainage circuit according to claim 1,
**characterised in that** the indicating means (23) are display means for displaying warning information formed by a visual scale proportional to the quantity of liquid (24) contained in the reserve (20).

3. Drainage circuit according to any one of claims 1 and 2,
**characterised in that** the chamber (16) is formed by an upstream volume (17) of the monitoring duct (14) defined by its section and arranged in line with a downstream volume (18) of the monitoring duct (14) defined by its section, the retaining means (15) being formed by restriction means for restricting the flow of the liquid (5) between said upstream volume (17) and said downstream volume (18).

4. Drainage circuit according to claim 3,
**characterised in that** the restriction means are formed by a constriction of the monitoring duct (14).

5. Drainage circuit according to claim 4,
**characterised in that** the constriction is formed by a progressive reduction in the section of the monitoring duct (14) between the upstream volume (17) and the downstream volume (18).

6. Drainage circuit according to claim 3,
**characterised in that** the restriction means are formed by a retaining valve (34) of adjustable flow rate, the valve being calibrated and being provided with means for preventing its flow rate from being modified by unauthorised personnel.

7. Drainage circuit according to any one of claims 1 to 6,
**characterised in that** the indicating means (23) comprise a viewing window (25) for viewing the quantity of liquid (24) contained in the reserve (20).

8. Drainage circuit according to any one of claims 1 to 7,
**characterised in that** the indicating means (23) comprise a display member incorporating a visual scale, the implementation of which is placed in dependence on means for measuring the quantity of liquid contained in the reserve (20).

9. Drainage circuit according to any one of claims 1 to 8,
**characterised in that** the chamber (16) and the container (21) are in hydraulic communication with each other via a spill duct (22) interposed between the monitoring duct (14) and the container (21).

10. Drainage circuit according to any one of claims 1 to 9,
**characterised in that** the container (21) is fitted with an emptying device (26) for selectively emptying the container (21), comprising a discharge valve (27) for discharging the liquid (24) out from the container (21) to an emptying duct (28) in hydraulic communication with the downstream duct (9).

11. Drainage circuit according to any one of claims 1 to 10,
**characterised in that** the container (21) is fitted with an overflow discharge device (29), comprising an overflow duct (30) placed in the container (21) and in hydraulic communication with the downstream duct (9).

12. Drainage circuit according to claim 11,
**characterised in that** the monitoring appliance (13, 13') is provided with a purge circuit for purging the monitoring duct (14) in the event of the monitoring duct (14) comprising the spill duct (22), the container (21) and the overflow duct (30) becoming obstructed by the liquid (5).

13. Drainage circuit according to any one of claims 1 to 12,
**characterised in that** the monitoring appliance (13) is provided with a rejection duct (31) for rejecting all of the liquid (5) admitted into the monitoring duct (14), said rejection duct (31) being in hydraulic communication with the downstream duct (9).

14. Drainage circuit according to claim 13,
**characterised in that** the rejection duct (31) is formed by the emptying duct (28), in which open the downstream end of the overflow duct (30) and the downstream end of the monitoring duct (14).

15. Drainage circuit according to any one of claims 13 and 14,
**characterised in that** the monitoring appliance (13) is provided with reversible joining means (32,33) for joining the monitoring duct (14) to the upstream duct (7), and the rejection duct (31) to the downstream duct (9).

16. Drainage circuit according to any one of claims 1 to 15,
**characterised in that** the drainage circuit (4) is a circuit for discharging to the outside at least one leakage liquid (5) collected by the upstream duct (7) from a power plant (2) of a rotorcraft (1).

17. Drainage circuit according to claim 16,
**characterised in that** a said downstream duct (9) is a drainage duct for runoff water.

18. Drainage circuit according to any one of claims 16 and 17,
**characterised in that** a said downstream duct (9) is in exclusive hydraulic communication with at least one said monitoring appliance (13, 13').

19. Drainage circuit according to any one of claims 16 to 18,
**characterised in that** a said monitoring appliance (13, 13') is in exclusive hydraulic communication with an upstream duct (7, 7') for collecting a specific liquid (5) by a corresponding elementary drainage circuit (11, 11') which the drainage circuit (4) comprises.

20. Drainage circuit according to any one of claims 16 to 19,
**characterised in that** a said monitoring appliance (13) is in hydraulic communication with a plurality of respective upstream ducts (7, 7') for collecting liquids (5, 5') by corresponding elementary drainage circuits (11, 11') of the drainage circuit (4).

21. Drainage circuit according to any one of claims 1 to 15,
**characterised in that** the drainage circuit (4) is a circuit for discharging to the outside at least one leakage liquid (5) collected by the upstream duct (7) from a fuel tank of a rotorcraft (1).
